Europäisches Patentamt

European Patent Office

Office européen des brevets

(19)

(11) EP 0 663 590 B1

(12) FASCICULE DE BREVET EUROPEEN

(45) Date de publication et mention
de la délivrance du brevet:
**10.12.1997 Bulletin 1997/50**

(51) Int Cl.6: **G01N 21/21**

(21) Numéro de dépôt: **95400049.3**

(22) Date de dépôt: **10.01.1995**

(54) **Ellipsomètre spectroscopique modulé**

Moduliertes Spektralellipsometer

Modulated spectroscopic ellipsometer

(84) Etats contractants désignés:
CH DE FR GB LI

(30) Priorité: **12.01.1994 FR 9400285**

(43) Date de publication de la demande:
**19.07.1995 Bulletin 1995/29**

(73) Titulaire: **CENTRE NATIONAL DE
LA RECHERCHE SCIENTIFIQUE (CNRS)**
**75794 Paris Cédex 16 (FR)**

(72) Inventeurs:
- **Drevillon, Bernard**
  **F-92190 Meudon (FR)**
- **Parey, Jean-Yves**
  **F-91620 La Ville du Bois (FR)**
- **Ossikovski, Razvigor,**
  **Lab. de Phys. (CNRS UPR 258)**
  **F-91128 Palaiseau Cedex (FR)**

(74) Mandataire: **Michelet, Alain**
**Cabinet Harlé et Phélip**
**21 rue de la Rochefoucauld**
**75009 Paris (FR)**

(56) Documents cités:
FR-A- 2 685 962          US-A- 4 866 264

- THIN SOLID FILMS, vol.233, no.1/2, 12 Octobre 1993, LAUSANNE CH pages 112 - 116 J.-TH. ZETTLER ET AL. 'MODULATED ELLIPSOMETRY FOR CHARACTERIZATION OF MULTIPLE QUANTUM WELLS AND SUPERLATTICES'
- PHYSICAL REVIEW, B. CONDENSED MATTER, vol.46, no.24, 15 Décembre 1992, NEW YORK US pages 15955 - 15962 J.-TH. ZETTLER ET AL. 'MODULATED ELLIPSOMETRIC MEASUREMENTS AND TRANSFER-MATRIX CALCULATION OF THE FIELD-DEPENDENT DIELECTRIC FUNCTION OF A MULTIPLE QUANTUM WELL'
- PHYSICAL REVIEW, B. CONDENSED MATTER, vol.5, no.6, 15 Mars 1972, NEW YORK US pages 2242 - 2250 E. YANG ET AL. 'ELECTROREFLECTANCE IN A NONUNIFORM FIELD IN THE SMALL-WAVE-NUMBER APPROXIMATION AND ITS MEASUREMENT BY ELLIPSOMETRY'
- APPLIED OPTICS, vol.18, no.6, 15 Mars 1979, NEW YORK US pages 813 - 817 HENRY T. MINDEN 'ELLIPSOMETRIC MEASUREMENT OF THE KERR MAGNETOOPTIC EFFECT'
- VIDE, LES COUCHES MINCES, vol.47, no.258, Août 1991, PARIS FR pages 264 - 273 R. BENFERHAT 'DESIGN OF NEW IN SITU SPECTROSCOPIC PHASE MODULATED ELLIPSOMETER'

EP 0 663 590 B1

**Description**

La présente invention concerne un ellipsomètre spectroscopique modulé.

L'ellipsométrie est une technique de mesure non destructive permettant la caractérisation optique d'un échantillon disposant d'une surface spéculaire ou quasi-spéculaire.

L'ellipsométrie peut être mise en oeuvre in situ et permet alors l'étude des mécanismes de croissance des couches minces, de formation des interfaces et le contrôle de procédés d'élaboration de ces couches et interfaces. L'ellipsométrie est, par exemple, utilisée pour l'étude et le contrôle de la fabrication des semi-conducteurs.

Les mesures ellipsométriques peuvent être réalisées à longueur d'onde fixe ou variable (ellipsométrie spectroscopique). Elles font partie de l'ensemble des techniques de mesures spéculaires, telles que la réflectance, la réflectance modulée (électroréflectance, photoréflectance), la réflectance anisotrope (réflectance différentielle spectroscopique), les mesures d'absorption et de transmission... auxquelles elles peuvent être associées.

Pour la réalisation des mesures ellipsométriques, la surface d'un échantillon est éclairée par un faisceau lumineux et l'état de polarisation du faisceau réfléchi r ou transmis est comparé à celui du faisceau incident i. Le vecteur de polarisation E est généralement représenté par ses projections $E_s$ et $E_p$, respectivement perpendiculaire et parallèle au plan d'incidence ; $E_p$ et $E_s$ sont des amplitudes complexes.

Dans le domaine de l'ellipsométrie, on représente généralement le rapport $(E_p/E_s)^r / (E_p/E_s)^i$, significatif des modifications de l'état de polarisation produites par la surface étudiée sous la forme :

$$tg\psi.exp(i\Delta) = (E_p/E_s)r / (E_p/E_s)i$$

L'ellipsométrie a donc pour but la mesure des paramètres $\psi$ et $\Delta$ pour une surface donnée.

Les matériaux ou phénomènes étudiés détermineront le domaine de longueur d'onde et les diverses conditions de réalisation de la mesure, par exemple la fréquence de modulation de polarisation... et par là, les appareils, ellipsomètres, qui devront être utilisés.

Ainsi, le brevet français FR-A-2.602.338 décrit un ellipsomètre à modulation de phase comportant un monochromateur à réseau.

Le brevet FR-2.685.962 décrit un ellipsomètre infrarouge à modulation de phase et à transformée de Fourier.

Des physiciens ont récemment mis à jour l'intérêt d'une caractérisation de couches, d'empilement de couches ou d'interfaces par des mesures ellipsométriques en présence ou en absence d'une excitation extérieure et de la comparaison des mesures obtenues en présence ou en absence d'excitation.

Cette excitation peut être une excitation thermique, optique, électrique, magnétique....

A ce sujet, on peut par exemple se référer à l'article "Modulated ellipsometric measurements and transfer-matrix calculation of the field-dependent dielectric function of a multiple quantum well" de J.-Th. ZETTLER (The American Physical Society - Phys. Rev. B46, 15955 - 1992) et à l'article "Photoellipsometry determination of surface Fermi level in GaAs (100)" extrait du Journal of Vacuum Science Technology A 11(4), July/August 1993 de Yi-Ming Xiong.

L'article "Modulated ellipsometry for characterization of multiple quantum wells and superlattices" de J-Th. ZETTLER et al. (Thin Solid Films - Vol. 233, 1993, pp. 112-166) est quant à lui consacré à l'ellipsométrie spectroscopique photomodulée pour la caractérisation optique complète non destructive d'échantillons de GaAs/AlGaAs à puits quantique multiple. Il divulgue un ellipsomètre équipé d'un laser pour la photomodulation des échantillons.

Le brevet américain US-4.866.264 décrit une méthode et un appareil pour la mesure de la réflectivité non réciproque de matériaux de couches minces et de miroirs magnétiques. L'appareil comprend un ellipsomètre équipé d'un laser d'excitation.

L'objet de la présente invention est un ellipsomètre spectrométrique permettant la mesure des paramètres ellipsométriques en présence et en absence d'excitation d'un échantillon.

C'est un autre objectif de proposer un tel ellipsomètre qui permette la réalisation de mesures avec une précision supérieure à celles autorisées par des appareils connus jusqu'à présent.

Par ailleurs, il a également été constaté que les paramètres ellipsométriques mesurés en présence et en absence d'excitation extérieure dépendent de la fréquence à laquelle une excitation périodique est appliquée.

C'est également un objectif de l'invention de permettre la mesure des paramètres ellipsométriques de l'échantillon en fonction de la fréquence d'excitation.

A cet effet, l'invention concerne un ellipsomètre spectroscopique modulé à une fréquence $\omega_m$ destiné à la mesure d'un échantillon comportant un ellipsomètre spectroscopique à modulation de phase, équipé de moyens électroniques de traitement et fournissant des paramètres ellipsométriques, et des moyens d'excitation extérieure de l'échantillon produisant une excitation alternative, périodique, de fréquence $\Omega_e$ d'excitation, dont une référence est adressée aux moyens électroniques de traitement.

La modulation à la fréquence $\omega_m$ est la modulation du faisceau incident ou du faisceau réfléchi usuellement mise en oeuvre dans les ellipsomètres spectroscopiques.

Selon l'invention, l'ellipsomètre spectroscopique modulé comporte un photodétecteur dont le signal électrique est traité par les moyens électroniques de traitement, ce signal électrique comportant des zones significatives d'excitation et des zones significatives de non-excitation. Les zones significatives sont exploitées pour produire les paramètres ellipsométriques de l'échantillon, respectivement en présence et en absence d'excitation extérieure, en fonction de la fréquence d'excitation extérieure.

De préférence, le signal comportant des zones transitoires séparant les zones significatives , les moyens électroniques de traitement neutralisent ces zones transitoires.

Avantageusement, les moyens électroniques de traitement effectuent des tests sur l'état des moyens d'excitation.

De manière préférée, la fréquence $\Omega_e$ d'excitation est inférieure à la fréquence de modulation $\omega_m$, et avantageusement faible par rapport à la fréquence de modulation $\omega_m$, les moyens électroniques de traitement sont synchronisés sur l'excitation extérieure et le signal électrique du photodétecteur est acquis par les moyens électroniques de traitement après un nombre t entier de périodes de modulation, à partir d'un front montant du signal d'excitation, pendant un nombre T de périodes de modulation pour produire les paramètres ellipsométriques en présence d'excitation, puis après un nombre t de périodes de modulation, à partir d'un front descendant du signal d'excitation, pendant un nombre T de périodes de modulation pour produire les paramètres ellipsométriques en absence d'excitation, T ayant pour valeur le nombre

$$\left( \left[ \frac{\omega_m}{\Omega_e x 2} \right] - 2t \right)$$

où l'expression

$$\left[ \frac{\omega_m}{\Omega_e x 2} \right]$$

désigne la partie entière de

$$\frac{\omega_m}{\Omega_e \ x \ 2}.$$

De manière analogue dans l'ensemble de ce texte, les crochets [ ] sont utilisés pour désigner la partie entière de l'expression qu'ils contiennent.

Un contrôle est avantageusement effectué par un test de niveau du signal d'excitation, fait au voisinage de chaque front montant et descendant.

L'introduction d'une troisième modulation, constituée par le découpage du faisceau lumineux de l'ellipsomètre spectroscopique à une fréquence $\omega_c$ comprise entre la fréquence $\omega_m$ de modulation de l'ellipsomètre et la fréquence $\Omega_e$ d'excitation, permet d'améliorer la précision des paramètres mesurés. Une référence de la fréquence de découpage est adressée aux moyens électroniques de traitement.

L'excitation de l'échantillon peut être obtenue par des phénomènes physiques variés, elle peut être lumineuse, électrique, magnétique, thermique....

Une bonne précision est obtenue, sans découpage du faisceau lumineux de l'ellipsomètre, avec une fréquence de modulation de l'ordre de 50 kHz et une fréquence d'excitation de l'ordre de 5 kHz.

On obtient également une excellente précision de mesure en mettant en oeuvre une fréquence $\omega_m$ de modulation de l'ellipsomètre de l'ordre de 50 kHz, une fréquence $\Omega_e$ d'excitation de l'ordre de 1 kHz, et une fréquence de découpage de l'ordre de 5 kHz.

L'invention sera décrite en détail en référence aux dessins annexés, dans lesquels :

-   la Figure 1 est un schéma général de l'ellipsomètre selon l'invention à double modulation ;
-   la Figure 2 est un chronogramme du signal électrique fourni par le photodétecteur par rapport au signal d'excitation dans l'ellipsomètre de la Figure 1 ;

- la Figure 3 est un schéma général de l'ellipsomètre selon l'invention à triple modulation ;
- la Figure 4 est un chronogramme du signal électrique fourni par le photodétecteur par rapport au signal d'excitation et au signal de découpage dans l'ellipsomètre de la Figure 3.

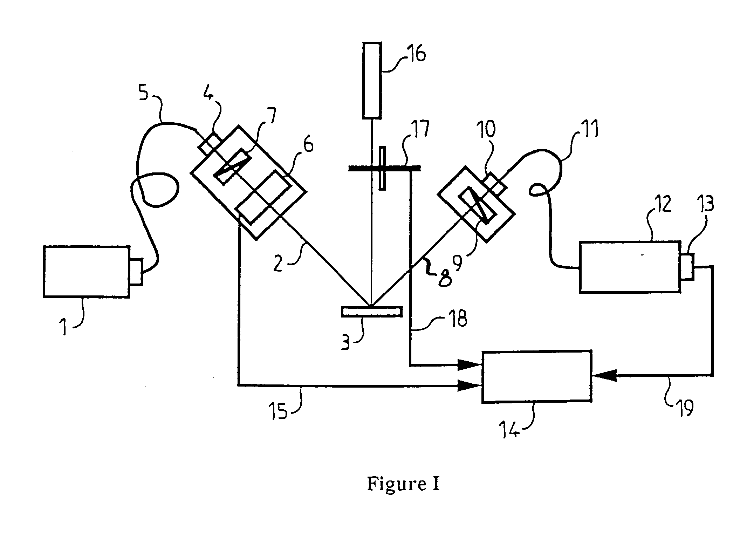

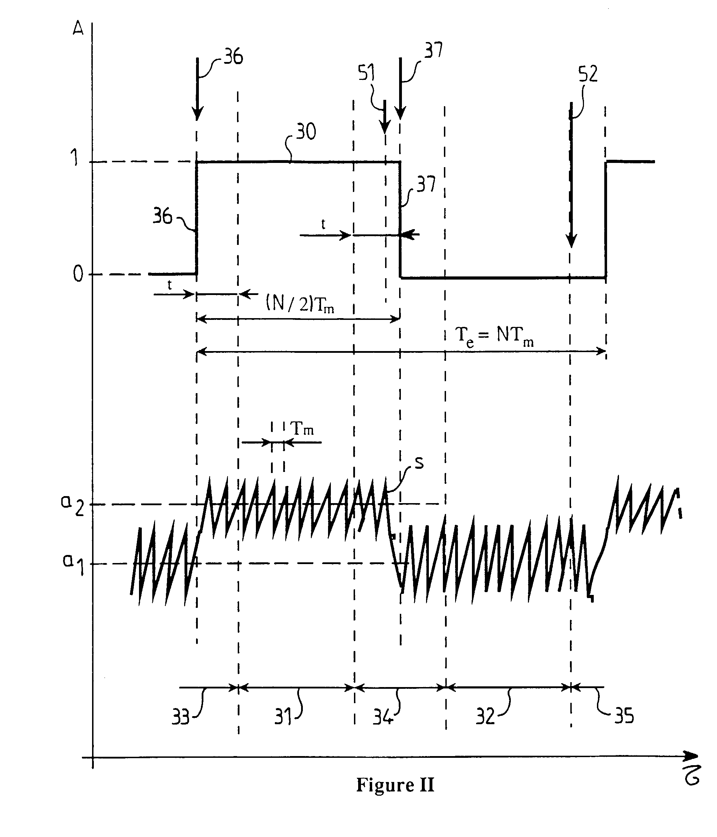

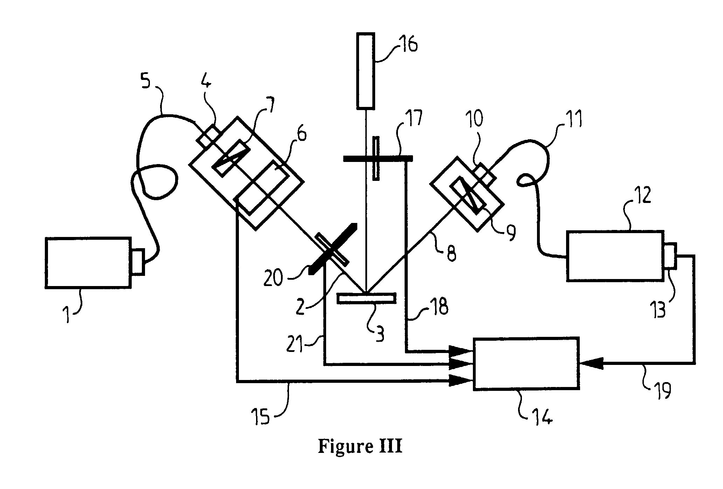

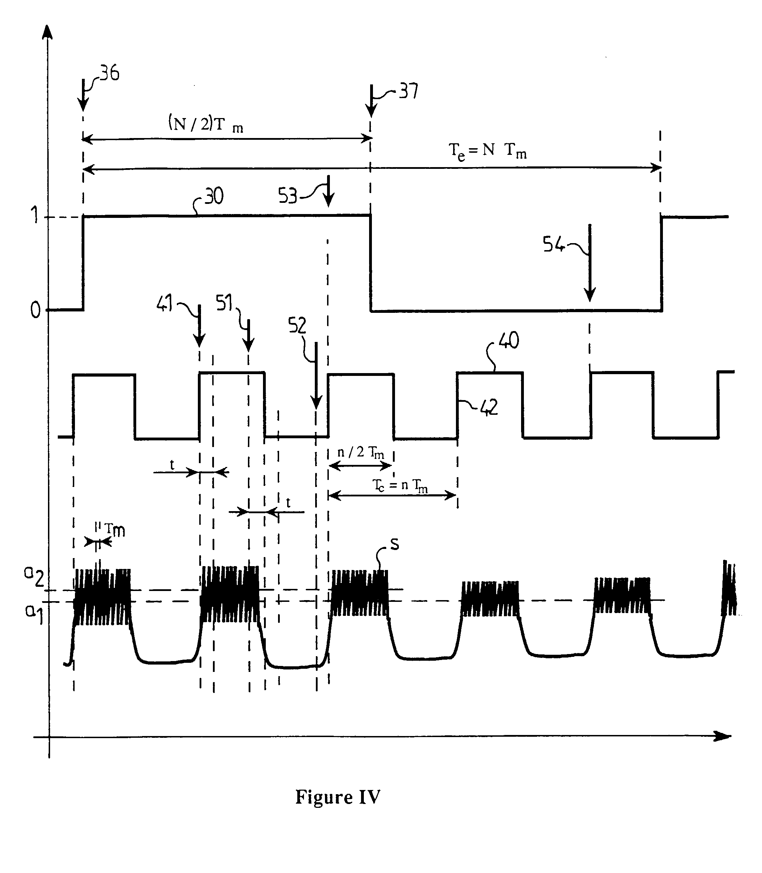

Les éléments analogues ont été affectés des mêmes références numériques, respectivement sur les Figures 1 et 3 et sur les Figures 2 et 4.

Une source lumineuse 1 émet un faisceau lumineux 2 dirigé sur un échantillon 3 par un système optique 4. Le système optique 4 est éventuellement couplé à la source 1 par l'intermédiaire d'une fibre optique 5.

Un modulateur photoélastique 6 placé après un polariseur 7 produit la modulation de la phase de la polarisation du faisceau lumineux 2. Après réflexion sur l'échantillon, le faisceau lumineux 8 est analysé par un analyseur 9 et repris par un système optique 10 qui, éventuellement par l'intermédiaire d'une fibre optique 11, l'adresse sur un monochromateur 12. L'intensité du flux transmis par le monochromateur est transformé par un détecteur 13 en un signal électrique fourni à des moyens électroniques de traitement 14, comportant en particulier un ordinateur.

Les moyens électroniques de traitement 14 reçoivent également une référence de fréquence et de phase du modulateur photoélastique par une ligne 15.

La source lumineuse 1 est une source à spectre étendu dans le domaine de longueur d'onde considéré où l'on cherche à réaliser la mesure des paramètres ellipsométriques de l'échantillon 3.

L'échantillon 3 reçoit une excitation extérieure périodique d'un excitateur extérieur 16 dont l'effet est modulé par un découpeur 17 à la fréquence $\Omega_e$. Une référence de la phase et de la fréquence du découpage du découpeur 17 est adressée par une ligne 18 aux moyens électroniques de traitement 14.

Une connexion 19 relie le détecteur 13 aux moyens électroniques de traitement 14.

Tel que représenté sur les Figures 2 et 4, le signal d'excitation extérieure 30 est un signal périodique en forme de créneau de période $T_e$ et de fréquence $\Omega_e$. Ce signal est en forme de créneau prenant alternativement la valeur 1 sur la première moitié de la période $T_e$, puis la valeur 0 sur l'autre moitié de cette période.

Le signal électrique s fourni par le photodétecteur 13 est modulé à la fréquence $\omega_m$ de modulation du modulateur photoélastique 6 et sa valeur moyenne prend deux valeurs a1 et a2 selon que l'échantillon 3 est soumis ou n'est pas soumis à l'excitation extérieure provenant de l'excitateur 16. La période $T_m$ de modulation est contenue n fois dans la période $T_e$ d'excitation. Il faut souligner que n n'est pas nécessairement un nombre entier.

Le signal s du détecteur est décomposé en des zones significatives d'excitation 31, des zones significatives de non-excitation 32 et des zones transitoires 33, 34, 35.

Les zones de transition 34 d'une part, 33 et 35 d'autre part, ont une durée égale à 2 t $T_m$, où t est un nombre entier au moins égal à 1 qui dépend de la nature de l'excitation extérieure. Il est avantageusement égal à 2.

Le traitement effectué par les moyens électroniques 14 sur le signal s fourni par le détecteur 13 au travers de la ligne 19 permet de neutraliser les valeurs du signal s pendant les périodes transitoires 33 à 35 et d'utiliser les valeurs du signal, respectivement pendant les périodes d'excitation 31 et de non-excitation 32, pour obtenir les valeurs des paramètres ellipsométriques, respectivement en présence et en absence d'excitation.

A cet effet, l'acquisition des signaux significatifs est synchronisée à partir d'un front montant 36 ou d'un front descendant 37 du signal découpeur 30. A partir de ces fronts, un nombre t de périodes de modulation d'une durée $T_m$ sont neutralisées, puis les valeurs du signal s sont acquises pendant un nombre T de périodes de modulation ayant pour valeur

$$\left( \left[ \frac{\omega_m}{\Omega_e \times 2} \right] - 2\,t \right)$$

Pour contrôler la validité des données acquises, des tests permettant de vérifier l'état du signal découpeur 30 sont réalisés. Un premier test 51 est fait pendant les t périodes de modulation suivant l'acquisition du signal en présence d'excitation. Il est validé lorsqu'il est confirmé que le signal découpeur 80 a pour valeur 1 correspondant à la présence de l'excitation.

De manière analogue, un deuxième test 52 est pratiqué pendant les t périodes de modulation suivant l'acquisition du signal en absence d'excitation. Il est validé lorsqu'il est confirmé que le signal découpeur 30 a pour valeur 0 correspondant à l'absence d'excitation.

Les contributions obtenues pendant cette acquisition du signal, respectivement en présence et en absence d'excitation, sont éventuellement cumulées, puis traitées ultérieurement, de manière traditionnelle, par les moyens électroniques de traitement pour fournir les paramètres ellipsométriques $\psi_1$ et $\Delta_1$ en présence d'excitation et $\psi_2$ et $\Delta_2$ en absence d'excitation.

Lorsque l'ellipsomètre mis en oeuvre est à modulation de phase, ce qui correspond au mode de réalisation préféré de l'invention, il est connu que l'accès aux paramètres $\psi$ et $\Delta$ passe par la décomposition du signal s reçu, par transformée de Fourier, en trois composantes S0, S1, S2, respectivement continue, à la fréquence $\omega_m$ et à la fréquence $2\omega_m$.

La précision obtenue sur la composante continue S0 est améliorée par l'introduction d'une troisième modulation, telle que représentée sur les Figures 3 et 4.

A cet effet, un découpeur 20 est interposé sur le faisceau lumineux 2 de l'ellipsomètre entre le modulateur photoélastique et l'échantillon. Bien entendu, sans modifications substantielles, ce découpeur pourrait être placé en n'importe quelle position entre la source 1 et le détecteur 13.

Une référence de ce découpage est fournie par la ligne 21 aux moyens électroniques de traitement 14.

Les signaux alors obtenus sont représentés sur la Figure 4.

Le signal d'excitation extérieure fourni par l'excitateur 16 est référencé 30 et a la forme de créneau indiquée plus haut.

Le signal de découpage du découpeur 20 a également une forme en créneau 40, il a une période $T_c$ et prend la valeur 1 sur la première moitié de cette période et la valeur 0 sur la deuxième moitié.

L'acquisition du signal détecteur s par les moyens électroniques de traitement 14 en présence d'excitation est synchronisée sur le front montant 41 du signal de découpage 40, après synchronisation au front montant 36, lorsque le signal d'excitation 30 a une valeur égale à 1.

A partir du front montant 41, un nombre t de périodes de modulation $T_m$ est neutralisé, puis l'acquisition est faite pendant une durée correspondant à un nombre de périodes de modulation $T_m$ égal à

$$\left( \left[ \frac{\omega_m}{\omega_c \times 2} \right] - 2\, t \right)$$

De la même manière, les valeurs significatives du signal en l'absence d'excitation seront acquises à partir d'un front montant 42 du signal de découpage 40, lorsque la valeur du signal d'excitation 30 est égale à 0, après synchronisation au front descendant 37.

Il faut que les périodes du découpeur $T_c$ et de l'excitation extérieure $T_e$ soient telles que chaque demi-période de l'excitation extérieure $T_e$ contienne au moins une période du découpeur $T_c$.

Ainsi, au moins une période $T_c$ du découpeur 20 placé sur le faisceau de l'ellipsomètre intervient pendant chaque demi-période $T_e$ de l'excitation.

Comme dans le mode de réalisation précédent des tests 51 et 52 sont faits sur le signal de découpage 30 de l'excitation. De plus, des tests analogues 53 et 54 sont réalisés sur le signal de découpage 40 du faisceau de l'ellipsomètre.

L'ensemble des valeurs acquises dans de telles conditions sur plusieurs périodes successives du signal d'excitation pourront être cumulées et exploitées pour extraire les paramètres ellipsométriques recherchés.

L'ellipsomètre de l'invention permet ainsi d'obtenir de nouveaux paramètres, les paramètres ellipsométriques de l'échantillon en fonction de la fréquence d'excitation, qu'il était pratiquement impossible de mesurer auparavant.

De plus, sans aucune modification, cet appareil peut également être utilisé dans des conditions permettant d'accéder aux paramètres dont la mesure est bien connue.

En l'absence d'excitation, il se comporte en ellipsomètre spectroscopique et permet donc la mesure des paramètres ellipsométriques de l'échantillon.

Il permet également en l'absence de modulation photoélastique de pratiquer des mesures de réflectance et des mesures de réflectance modulée, électroréflectance, photoréflectance....

Différents modes de réalisation alternatifs de l'invention sont envisageables, en particulier le signal d'excitation extérieure 30 peut, à l'inverse de ce qui a été décrit plus haut, prendre une valeur nulle sur la première partie de sa période et la valeur 1 sur la partie complémentaire. Dans un cas comme dans l'autre, la première et la deuxième parties de la période peuvent avoir des durées inégales.

Il est également possible de remplacer le monochromateur par un spectrographe qui, associé à un détecteur convenable, permet de faire une analyse simultanément sur plusieurs longueurs d'onde.

Les signes de référence insérés après les caractéristiques techniques mentionnées dans les revendications, ont pour seul but de faciliter la compréhension de ces dernières, et n'en limitent aucunement la portée.

**Revendications**

1. Ellipsomètre spectroscopique modulé à une fréquence ($\omega_m$) destiné à la mesure d'un échantillon (3) comportant un ellipsomètre spectroscopique à modulation de phase, équipé de moyens électroniques de traitement (14) et fournissant des paramètres ellipsométriques, et des moyens (16) d'excitation extérieure de l'échantillon produisant une excitation (30) alternative, périodique, de fréquence ($\Omega_e$) d'excitation, dont une référence est adressée aux moyens électroniques de traitement (14),
caractérisé en ce que l'ellipsomètre spectroscopique modulé comporte un photodétecteur (13) dont le signal électrique (s) est traité par les moyens électroniques de traitement (14), ledit signal (s) comportant des zones significatives d'excitation (31) et des zones significatives de non-excitation (32), ces zones significatives (31, 32) étant exploitées pour produire les paramètres ellipsométriques de l'échantillon, respectivement en présence ($\psi_1$, $\Delta_1$) et en absence ($\psi_2$, $\Delta_2$) d'excitation, en fonction de la fréquence ($\Omega_e$) d'excitation.

2. Ellipsomètre spectroscopique modulé selon la revendication 1, caractérisé en ce que ledit signal (s) comportant des zones transitoires (33-35) séparant les zones significatives (31, 32), les moyens électroniques de traitement (14) neutralisent lesdites zones transitoires (33-35).

3. Ellipsomètre spectroscopique modulé selon l'une des revendications 1 ou 2, caractérisé en ce que les moyens électroniques de traitement (14) effectuent des tests sur l'état des moyens d'excitation.

4. Ellipsomètre spectroscopique modulé selon l'une quelconque des revendications 1 à 3, caractérisé en ce que la fréquence ($\Omega_e$) d'excitation est inférieure à la fréquence de modulation ($\omega_m$), que les moyens électroniques de traitement (14) sont synchronisés sur l'excitation et que le signal électrique du photodétecteur (13) est acquis par les moyens électroniques de traitement (14) après un nombre (t) entier de périodes de modulation, à partir d'un front montant du signal d'excitation pendant un nombre (T) de périodes de modulation pour produire les paramètres ellipsométriques en présence d'excitation, puis après un nombre (t) de périodes de modulation, à partir d'un front descendant du signal d'excitation pendant un nombre (T) de périodes de modulation pour produire les paramètres ellipsométriques en absence d'excitation, (T) ayant pour valeur

$$\left( \left[ \frac{\omega_m}{\Omega_e \times 2} \right] - 2t \right)$$

5. Ellipsomètre spectroscopique modulé selon la revendication 4, caractérisé en ce qu'un test de niveau du signal d'excitation est fait au voisinage de chaque front montant et descendant.

6. Ellipsomètre spectroscopique modulé selon l'une quelconque des revendications 1 à 5, caractérisé en ce que l'excitation de l'échantillon est lumineuse.

7. Ellipsomètre spectroscopique modulé selon l'une quelconque des revendications 1 à 5, caractérisé en ce en ce que l'excitation de l'échantillon est électrique.

8. Ellipsomètre spectroscopique modulé selon l'une quelconque des revendications 1 à 5, caractérisé en ce que l'excitation de l'échantillon est magnétique.

9. Ellipsomètre spectroscopique modulé selon l'une quelconque des revendications 1 à 8, caractérisé en ce que la fréquence ($\omega_m$) de modulation de l'ellipsomètre est de l'ordre de 50 kHz et la fréquence ($\Omega_e$) d'excitation est de l'ordre de 5 kHz.

10. Ellipsomètre spectroscopique modulé selon l'une quelconque des revendications 1 à 9, caractérisé en ce que l'ellipsomètre spectroscopique comporte un faisceau lumineux, ledit faisceau étant découpé à une fréquence ($\omega_c$) comprise entre la fréquence ($\omega_m$) de modulation de l'ellipsomètre et la fréquence ($\Omega_e$) d'excitation, une référence de cette fréquence de découpage étant adressée aux moyens électroniques de traitement.

11. Ellipsomètre spectroscopique modulé selon la revendication 10, caractérisé en ce que la fréquence ($\omega_m$) de modulation de l'ellipsomètre est de l'ordre de 50 kHz, la fréquence ($\Omega_e$) d'excitation de l'ordre de 1 kHz et la fréquence

($\omega_c$) de découpage de l'ordre de 5 kHz.

## Patentansprüche

1. Mit einer Frequenz ($\omega_m$) moduliertes spektroskopisches Ellipsometer zum Messen einer Probe (3), mit einem spektroskopischen Phasemnodulationsellipsometer, das mit einer elektronischen Einrichtung (14) zum Verarbeiten und Liefern von ellipsometrischen Parametern und mit einer elektronischen Einrichtung (16) zum Erregen der Probe von außen versehen ist, welche eine alternierende periodische Erregung (30) mit einer Erregerfrequenz ($\Omega_e$) erzeugt und von der eine Referenzfrequenz an die elektronische Verarbeitungseinrichtung (14) geliefert wird, dadurch gekennzeichnet, daß das modulierte spektroskopische Ellipsometer einen Photodetektor (13) aufweist, dessen elektrisches Signal (s) von der elektronischen Verarbeitungseinrichtung (14) verarbeitet wird, wobei das Signal (s) signifikante Erregungsbereiche (31) und signifikante Nicht-Erregungsbereiche (32) aufweist, wobei die signifikanten Bereiche (31, 32) zur Erzeugung der ellipsometrischen Parameter der Probe in Abhängigkeit von der Erregerfrequenz ($\Omega_e$), jeweils bei Vorhandensein ($\Psi_1$, $\Delta_1$) und Nichtvorhandensein ($\Psi_2$, $\Delta_2$) von Erregung, ausgewertet werden.

2. Moduliertes spektroskopisches Ellipsometer nach Anspruch 1, dadurch gekennzeichnet, daß das Signal (s) Übergangsbereiche (33-35) aufweist, welche die signifikanten Bereiche (31, 32) voneinander trennen, und die elektronische Verarbeitungseinrichtung (14) diese Übergangsbereiche (33-35) neutralisiert.

3. Moduliertes spektroskopisches Ellipsometer nach einem der Ansprüche 1 oder 2, dadurch gekennzeichnet, daß die elektronische Verarbeitungseinrichtung (14) Tests bezüglich des Zustands der Erregungseinrichtung durchführt.

4. Moduliertes spektroskopisches Ellipsometer nach einem der Ansprüche 1 bis 3, dadurch gekennzeichnet, daß die Erregerfrequenz ($\Omega_e$) im Vergleich zur Modulationsfrequenz ($\omega_m$) niedrig ist, daß die elektronische Verarbeitungseinrichtung (14) mit der Erregung synchronisiert ist, und daß das elektrische Signal des Photodetektors (13) von der elektronischen Verarbeitungseinrichtung (14) nach einer ganzen Zahl (t) von Modulationsperioden, ausgehend von einer Anstiegsflanke des Erregungssignals während einer Zahl (T) von Modulationsperioden zur Erzeugung der ellipsometrischen Parameter bei Vorhandensein der Erregung, und anschließend nach einer Zahl (t) von Modulationsperioden, ausgehend von einer Abstiegsflanke des Erregungssignals während einer Zahl (T) von Modulationsperioden zum Erzeugen der ellipsometrischen Parameter bei Nichtvorhandensein der Erregung, erfaßt wird, wobei (T) den folgenden Wert hat:

$$\left(\left\lfloor\frac{\omega_m}{\Omega_e x2}\right\rfloor - 2t\right)$$

5. Moduliertes spektroskopisches Ellipsometer nach Anspruch 4, dadurch gekennzeichnet, daß bei jeder Anstiegs- und Abstiegsflanke ein Test des Pegels des Erregungssignals erfolgt.

6. Moduliertes spektroskopisches Ellipsometer nach einem der Ansprüche 1 bis 5, dadurch gekennzeichnet, daß das spektroskopische Ellipsometer einen Lichtstrahl aufweist, der auf eine Frequenz $\omega_c$, die zwischen der Modulationsfrequenz ($\omega_m$) des Ellipsometers und der Erregerfrequenz ($\Omega_e$) liegt, begrenzt ist, wobei eine Referenzfrequenz dieser Begrenzungsfrequenz an die elektronische Verarbeitungseinrichtung geliefert wird.

7. Moduliertes spektroskopisches Ellipsometer nach einem der Ansprüche 1 bis 6, dadurch gekennzeichnet, daß die Erregung der Probe durch Licht erfolgt..

8. Moduliertes spektroskopisches Ellipsometer nach einem der Ansprüche 1 bis 6, dadurch gekennzeichnet, daß die Erregung der Probe elektrisch erfolgt.

9. Moduliertes spektroskopisches Ellipsometer nach einem der Ansprüche 1 bis 6, dadurch gekennzeichnet, daß die Erregung der Probe magnetisch erfolgt.

**10.** Moduliertes spektroskopisches Ellipsometer nach einem der Ansprüche 1 bis 5, dadurch gekennzeichnet, daß die Modulationsfrequenz ($\omega_m$) des Ellipsometers die Größenordnung von 50 kHz und die Erregerfrequenz ($\Omega_e$) die Größenordnung von 5kHz hat.

**11.** Moduliertes spektroskopisches Ellipsometer nach einem der Ansprüche 6 bis 9, dadurch gekennzeichnet, daß die Modulationsfrequenz ($\omega_m$) des Ellipsometers die Größenordnung von 50 kHz, die Erregerfrequenz ($\Omega_e$) die Größenordnung von 1 kHz und die Begrenzungsfrequenz die Größenordnung von 5 kHz hat.

## Claims

**1.** Spectroscopic ellipsometer modulated at a frequency ($\omega_m$) intended to measure a sample (3), comprising a phase-modulated spectroscopic ellipsometer, equipped with electronic processing means (14) and furnishing ellipsometric parameters, and external means (16) for exciting the sample producing an alternating, periodic excitation (30) at an excitation frequency ($\Omega_e$), a reference of which is sent to the electronic processing means (14), characterized in that the modulated spectroscopic ellipsometer comprises a photodetector (13) whose electric signal (s) is processed by the electronic processing means (14), said signal (s) comprising zones significant of excitation (31) and zones significant of non-excitation (32), those significant zones (31,32) being processed to produce the ellipsometric parameters of the sample, respectively in the presence ($\Psi_1$, $\Delta_1$) and absence ($\Psi_2$, $\Delta_2$) of excitation, as a function of the excitation frequency ($\Omega_e$).

**2.** The modulated spectroscopic ellipsometer of claim 1, characterized in that said signal (s) comprising transitory zones (33-35) separating the significant zones (31,32) the electronic processing means (14) neutralize said transitory zones (33-35).

**3.** The modulated spectroscopic ellipsometer according to either claim 1 or 2, characterized in that the electronic processing means (14) perform tests on the state of excitation means.

**4.** The modulated spectroscopic ellipsometer according to any of claims 1 to 3, characterized in that the excitation frequency ($\Omega_e$) is low with respect to the modulation frequency ($\omega_m$), the electronic processing means (14) are synchronized on the excitation, and the electric signal of the photodetector (13) is acquired by the electronic processing means (14) after a whole number (t) of modulation periods, starting from a positive-going transition of the excitation signal during a number (T) of modulation periods to produce the ellipsometric parameters in the presence of excitation, then after a number (t) of modulation periods, starting from a negative-going transition of the excitation signal during a number (T) of modulation periods to produce the ellipsometric parameters in the absence of excitation, the value of (T) being:

$$\left( \left[ \frac{\omega_m}{\Omega_e \times 2} \right] - 2\,t \right)$$

**5.** The modulated spectroscopic ellipsometer of claim 4, characterized in that a test of the level of the excitation signal is carried out in the vicinity of each positive-going transition and negative-going transition.

**6.** The modulated spectroscopic ellipsometer of claims 1 to 5, characterized in that the spectroscopic ellipsometer comprises a light beam, said beam being switched at a frequency ($\omega_c$) comprised between the ellipsometer's modulation frequency ($\omega_m$) and the excitation frequency ($\Omega_e$), a reference of this switching frequency being sent to the electronic processing means.

**7.** The modulated spectroscopic ellipsometer according to any of claims 1 to 6, characterized in that the excitation of the sample is luminous.

**8.** The modulated spectroscopic ellipsometer according to any of claims 1 to 6, characterized in that the excitation of the sample is electric.

**9.** The modulated spectroscopic ellipsometer according to any of claims 1 to 6, characterized in that the excitation of the sample is magnetic.

10. The modulated spectroscopic ellipsometer according to any of claims 1 to 5, characterized in that the modulation frequency ($\omega_m$) of the ellipsometer is in the order of 50 kHz and the excitation frequency ($\Omega_e$) in the order of 5 kHz.

11. The modulated spectroscopic ellipsometer according to any of claims 6 to 9, characterized in that the modulation frequency of ($\omega_m$) of the ellipsometer is in the order of 50 kHz, the excitation frequency ($\Omega_e$) in the order of 1 kHz and the switching frequency in the order of 5 kHz.

Figure I

**Figure II**

Figure III

Figure IV